(19) Europäisches Patentamt
European Patent Office
Office européen des brevets

(11) EP 4 425 281 A1

(12) EUROPEAN PATENT APPLICATION

(43) Date of publication:
04.09.2024 Bulletin 2024/36

(21) Application number: 23275037.2

(22) Date of filing: 28.02.2023

(51) International Patent Classification (IPC):
G05B 13/02 (2006.01)          G06N 3/045 (2023.01)

(52) Cooperative Patent Classification (CPC):
G05B 13/027; G06N 3/045; G06N 3/08;
G06N 3/084; G06N 3/0442

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: BAE SYSTEMS plc
London SW1Y 5AD (GB)

(72) Inventor: The designation of the inventor has not
yet been filed

(74) Representative: BAE SYSTEMS plc
Group IP Department
Warwick House
P.O. Box 87
Farnborough Aerospace Centre
Farnborough Hampshire GU14 6YU (GB)

(54) **CONTROLLING A SYSTEM USING AN ARTIFICIAL NEURAL NETWORK AND ARTIFICIAL NEURAL NETWORK TRAINING**

(57) Apparatus and method of training an artificial neural network, NN, useable as a controller for a system comprises obtaining (402) input data representing a tapped delay line comprising a plurality of reference signals of the system and inputting (404) the reference signals to a respective plurality of NNs that output a respective plurality of control signals. The plurality of NNs comprise a first NN and at least one further NN and weights and biases of the at least one further NN correspond to weights and biases of a current iteration of the first NN. The control signals are provided (406) to a model that simulates the system and outputs a model signal. A system error signal is generated (408) using the model signal, and a next iteration of the plurality of NNs is trained (410) using training data comprising the obtained input data and the system error signal.

```
┌─────────────────────────────────────────────────────┐
│              OBTAIN INPUT DATA                        │
│                                              402      │
└─────────────────────────────────────────────────────┘
                          │
                          ▼
┌─────────────────────────────────────────────────────┐
│  INPUT DATA TO PLURALITY OF CONTROL NNs TO OUTPUT     │
│          PLURALITY OF CONTROL SIGNALS                 │
│                                              404      │
└─────────────────────────────────────────────────────┘
                          │
                          ▼
┌─────────────────────────────────────────────────────┐
│     PLURALITY OF CONTROL SIGNALS TO MODEL NN          │
│                                              406      │
└─────────────────────────────────────────────────────┘
                          │
                          ▼
┌─────────────────────────────────────────────────────┐
│  GENERATE SYSTEM ERROR SIGNAL USING MODEL OUTPUT      │
│                     SIGNAL                            │
│                                              408      │
└─────────────────────────────────────────────────────┘
                          │
                          ▼
┌─────────────────────────────────────────────────────┐
│  GENERATE NEXT ITERATION OF THE PLURALITY OF NNs      │
│  USING THE MODEL OUTPUT SIGNAL AND THE INPUT DATA     │
│                                              410      │
└─────────────────────────────────────────────────────┘
```

FIG. 4

EP 4 425 281 A1

**Description**

FIELD OF THE INVENTION

The present invention relates to controlling a system using an artificial neural network and a training method for such an artificial neural network.

BACKGROUND

Control systems are used for many varied purposes. Examples include controlling unwanted noise and/or vibration in engineering systems or in public and private spaces. Passive control solutions are capable of effectively eliminating high frequency components of noise and vibration but are typically large or heavy, possibly exceeding the design constraints of a given application. Active control solutions, by contrast, are capable of good control at low frequencies, and are typically lightweight and small in size. Historically, feedforward active noise and vibration control systems have been implemented using linear control filters and linear plant models, commonly using the well-known FxLMS algorithm.

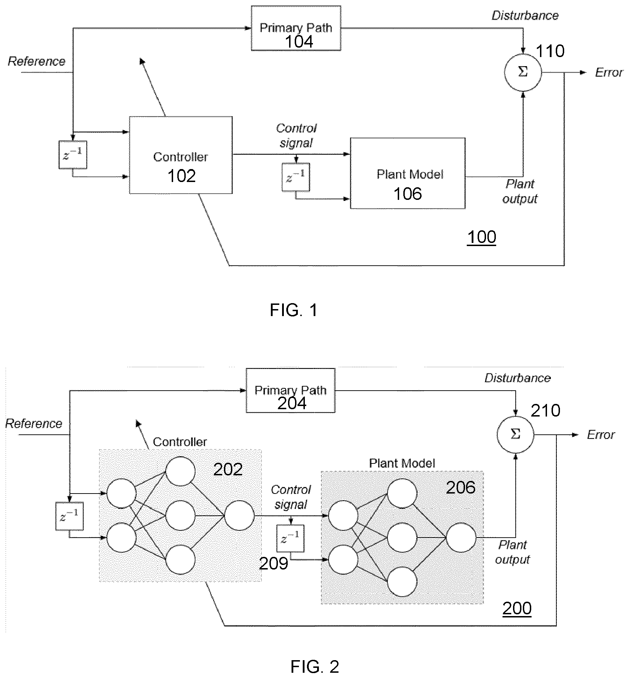

Figure 1 is a schematic diagram of a typical known linear feedforward control system 100. The system includes a controller 102 that receives input comprising a system reference signal x[n] and generates an output u[n] in the form of a control signal, e.g. $\mathbf{u}[n] = \mathbf{h}[n] * \mathbf{x}[n]$. $\mathbf{h}[n]$ and $\mathbf{x}[n]$ which are convolved to produce the (scalar) control signal u[$n$] at time/sample $n$ represent the Finite Impulse Response (FIR) control filter and tapped delay line of the reference signal x[n], respectively. The control signal is typically computed to cancel out the effect of a disturbance in the primary path 104 of the system by producing a control action based on a measurement of the disturbance.

The control signal u[n] is received by a plant model 106 that is configured to simulate the system and generate the expected output that the real system would output in response to a given input. The plant model outputs a plant signal y[n] based on the inputted control signal, e.g. $y[n] = \hat{\mathbf{g}} * \mathbf{u}[n]$. The plant model output $y[n]$ is linearly summed with the disturbance signal $d[n]$ by a summing component 110 to generate an error signal $e[n]$. In general the aim is for the plant model output $y[n]$ to match the disturbance signal $d[n]$ so that the system error is minimised in order to reduce noise/vibration in the system, for example.

If the plant is assumed to be Linear Time Invariant (LTI) then it can be well modelled by Finite Impulse Response (FIR) $\hat{\mathbf{g}}$. For a linear (e.g. FIR) controller, it is possible to 'switch' the controller and plant model, allowing for the FxLMS algorithm. However, nonlinearities present in either the plant or primary path of the control system can have a significant impact on control performance. If the plant is nonlinear then a nonlinear plant model is required. Further, if the primary path is nonlinear then a nonlinear controller is required.

A further known approach which has been applied to active control over the past few decades is the use of machine learning. Artificial Neural Networks (NNs) in particular possess the property of being 'universal approximators' and have been used in the modelling and control of unknown or uncertain nonlinear systems.

Figure 2 is a schematic diagram of a known feedforward control system 200 that uses NNs. The system comprises a first NN 202 that has been trained to function as a controller that outputs control signals. The first NN will have been trained using a dataset comprising system input signals and error signals generated in response to those inputs signals. Similarly to the case of the linear controller of Figure 1, the first NN 202 receives as input a tapped delay line of $x[n]$ and outputs a control signal $u[n]$. A tapped delay line comprising the control signal u[n] is input into a second NN 206 that has been trained to function as a system plant model. As in the arrangement of Figure 1, the plant model output $y[n]$ is linearly summed by a component 210 with the disturbance signal $d[n]$ of the primary path 204 in order to generate an error signal $e[n]$. The error signal is then used to update the weights and biases of the first NN.

The properties of the input, and therefore the effect of the system nonlinearity, may change in time and known solutions that use NNs do not generalize across a range of inputs. Controllers with good performance across a range of input magnitudes are essential in the control of real systems where the system input varies. Further, obtaining a tapped delay line between the controller NN 202 and the plant model NN 204 is problematic in the case of nonlinear inputs, where the 'switching' approach is not acceptable.

SUMMARY

Embodiments of the present invention are intended to address the above technical problems.

Some embodiments are based on training Multilayer Perceptron (MLP) NNs for a single-input-single-output (SISO) control system, e.g. an acoustic noise control system.

According to a first aspect of the present invention there is provided a computer-implemented method of training an artificial neural network, NN, useable as a controller for a system, the method comprising:

obtaining input data representing a tapped delay line comprising a plurality of reference signals of the system;

inputting the plurality of reference signals to a respective plurality of NNs that output a respective plurality of control signals, the plurality of NNs comprising a first NN and at least one further NN, wherein weights and biases of the at least one further NN correspond to weights and biases of a current iteration of the first NN;

providing data representing a tapped delay line comprising the plurality of control signals as input to a model configured to simulate the system and to output a model signal;

generating a system error signal using the model signal, and

training a next iteration of the plurality of NNs using training data comprising the obtained input data and the system error signal.

A number of the plurality of NNs can correspond to a number of the plurality of reference signals in the obtained input data (and the length of the tapped delay line represented by the obtained input data).

The current iteration of the NN may be generated using training data comprising previously-obtained input data comprising a plurality of reference signals obtained immediately prior to the obtained input data and corresponding system error signal generated using the previously-obtained input data.

The method may further comprise storing data representing a trained NN including the weights and biases of the first NN updated according to the current iteration of the NN.

The system error signal may be obtained by linearly summing a disturbance signal of the system and the model signal.

The weights and biases of the NN may be updated by backpropagation of the error signal. The method may further comprise applying a backpropagation technique to update the weights and biases of the NN to minimise a cost function of the error signal.

The model may comprise a further NN that has been trained to function as a plant model of the system.

The NN may comprise a Multilayer Perceptron (MLP) with a single hidden layer.

The outputs of the plurality of NNs may be represented by an equation:

$$u[n-k] = \sum_i w_i^{c,o} \sigma^c \left( \left[ \mathbf{W}\mathbf{x}[n-k] \right]_i + b_i^{c,h} \right) + b^{c,o}$$

where all weights and biases are those of the current iteration of the NN during training.

The input and output of the plurality of NNs may be non-linear. The input and output of the model may be non-linear. The controller may comprise an active and/or feedforward controller for the system.

The controller may be configured to control acoustic noise/vibration in the system.

According to another of the present invention there is provided apparatus for training an artificial neural network (e.g. a NN useable as a system controller), the system comprising a processor and memory, the memory comprising computer executable instructions for performing a method substantially as described herein.

According to another aspect of the invention there is provided an artificial neural network trained according to a method substantially as described herein.

According to another aspect of the present invention there is provided a system controller comprising an artificial neural network trained according to a method substantially as described herein.

According to another aspect of the invention there is provided a system including a system controller comprising an artificial neural network trained according to a method substantially as described herein. The system may comprise a model component configured to simulate the system, receive input from the controller and output a model signal. The system may comprise a component configured to linearly sum a disturbance signal of the system and the model signal.

According to a further aspect of the present invention there is provided a computer readable medium, or circuit, storing a computer program to operate methods substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Embodiments of the invention will now be described by way of example only and with reference to the accompanying drawings:

Figure 1 is a schematic diagram of a control system based on a conventional linear feedforward design;

Figure 2 is a schematic diagram of a control system based on a conventional dual-NN design;

Figure 3 is a schematic diagram of an architecture used to train an NN according to an example embodiment;

Figure 4 is a flowchart illustrating example steps executed to train the NN using the architecture of Figure 3;

Figure 5 is a schematic diagram of an arrangement that was used to obtain experimental results including a controller that can comprise an NN trained according to an embodiment;

Figure 6 is a graph presenting an example of the control performance of the trained NN controller of Figure 5 compared to the known FxLMS algorithm in the frequency domain, and

Figure 7 is a graph presenting the equivalent time domain results.

DETAILED DESCRIPTION

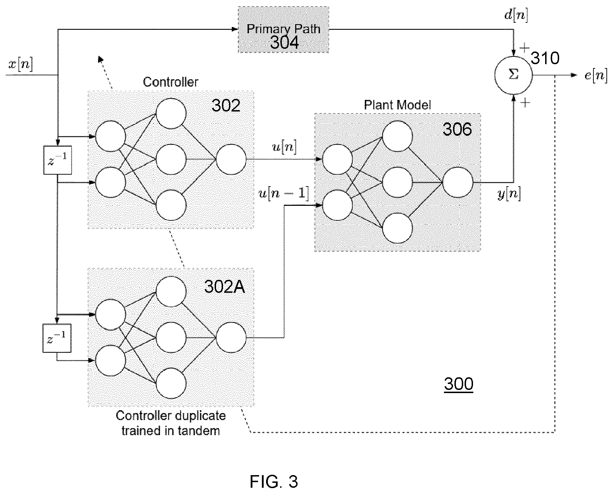

A diagram of an architecture 300 used for training an NN for system controller according to an example embodiment is shown in Figure 3. The architecture of a system typically refers to its structure in terms of system components and their interrelationships. Typically the architecture will be implemented using one or more processor configured to execute software modules. The input to the system comprises a tapped delay line that includes a plurality of reference signals. In practice, the length of the tapped delay line will be based on various factors including the impulse response, sample rate, etc, of a particular system.

The example architecture 300 comprises a first NN 302 configured to output data useable as a control signal based on the input. The example architecture also comprises a further NN 306 configured to function as a plant model that simulates the real system and can generate the expected output that the real system would output in response to a given input. In terms of architecture, the plant model NN can be anything that is capable of mapping the tapped delay line of control signals $\mathbf{u}[n]$ to the plant model output $y[n]$. If the mapping between $\mathbf{u}[n]$ and $y[n]$ is nonlinear then any typical NN architecture (e.g. MLP, RNN, LSTM etc) can be used to model this mapping. The choice of activation function will likely affect the maximal performance of a given architecture and its computational efficiency. The training of the NN model can be achieved via supervised learning using standard backpropagation methods, and defining a 'plant modelling error' which would be the difference between the *prediction* $\hat{y}[n]$ of the plant model given an input $\mathbf{u}[n]$, and the true measured output of the system, $y[n]$.

The controller NN 302 receives as input the tapped delay line of $x[n]$ and outputs a control signal $\mathbf{u}[n]$, which is received by the plant model NN 306. The plant model NN output $y[n]$ is linearly summed by a summation component 310 with the disturbance signal $d[n]$ of the primary path 304 to generate a system error signal $e[n]$.

In more detail, given a tapped delay line of length $L$ of the reference signal $x[n]$, given by

$$\mathbf{x}[n] = \begin{pmatrix} x[n] \\ x[n-1] \\ \dots \\ x[n-L+1] \end{pmatrix}$$

the control signal $\mathbf{u}[n]$ can be generated by inputting $\mathbf{x}[n]$ to the controller NN 302. In cases where the NN architecture is that of a Multilayer Perceptron (MLP) with a single hidden layer, then the output of the NN is given by

$$u[n] = \sum_i w_i^{c,o} h_i^c + b^{c,o}$$

where $w_i^{c,o}$ are the output weights of the NN, $b^{c,o}$ is the NN output bias, and $h_i^c$ are the NN hidden layer node values, given by

$$h_i^c = \sigma^c \left( \left[ \mathbf{W} \mathbf{x}[n] \right]_i + b_i^{c,h} \right)$$

where W is a matrix of weights between the input layer and hidden layer, $[\mathbf{W}\mathbf{x}[n]]_i$ is the $i^{th}$ element of the vector $\mathbf{W}\mathbf{x}[n]$, $\sigma^c(\cdot)$ is the nonlinear activation function applied to the controller hidden layer, and $b_i^{c,h}$ is the bias of the $i^{th}$ hidden layer node. In total,

$$u[n] = \sum_i w_i^{c,o} \sigma^c \left( \left[ \mathbf{W} \mathbf{x}[n] \right]_i + b_i^{c,h} \right) + b^{c,o}$$

However, a full tapped delay line **u**[n] is required to input to the plant model NN 306 to generate the plant model output y[n] and therefore the error e[n]. It is therefore necessary to have available previous control signal values u[n - 1], u[n - 2], ..., u[n - l + 1] for a tapped delay line of length l.

A known solution (see Z.-c. Qiu and W.-z. Zhang, "Trajectory planning and diagonal recurrent neural network vibration control of a flexible manipulator using structural light sensor," vol. 132, pp. 563-594) to this problem is to store the values of the control signal in memory, and simply call upon them when evaluating the output of the plant model and updating the controller weights and biases using a backpropagation method. However, this is an unusual task and standard machine learning libraries are not typically set up to handle it.

To explain how this known memory-based solution would operate in the dual-NN system controller of Figure 2, the memory would be provided to store the output of controller NN 202 and make it available as input for the plant model NN 206 (effectively taking the place of the unit delay component 209 in Figure 2). Therefore, the output u[n] from the controller NN 202 based on the reference signal x[n] would be generated based on the current iteration of the controller NN; however, the output u[n-1] retrieved from the memory would have been generated by the previous iteration of the controller NN.

Thus, the result of this known memory-based method is that the error signal e[n] does not accurately reflect the control performance of the current iteration of the controller; rather, it is calculated from a combination of the output u[n] generated by the current iteration of the controller NN and the outputs u[n-k] of the previous L - 1 iterations of the controller NN. This may lead to stability and performance issues in the training of the controller NN. An iteration can comprise the number of batches of training data that is needed to complete one training epoch/learning cycle.

As shown in Figure 3, embodiments overcome this problem by generating the previous controller outputs u[n - k] as if the current iteration of the controller NN 302 has always been in place. Embodiments achieve this using one or more copies 302A of the first controller NN 302 so that the total number of controller NNs corresponds to the number of reference signals input/the length of the tapped delay line input. Typically, at least one processor will execute the copies of the NNs.

As shown in Figure 3, the output of the first controller NN 302, for example, is u[n], is the first input to the plant model NN 306. Unit delays ($z^{-1}$) indicate the tapped delay line used. This is a vector $u[n]$ as defined above. The tapped delay line is used (as opposed to, for example, the current value of the reference x[n]) because the past inputs to the system continue to affect its output in the present and so this information is needed to model the current output of the system.

In the example of Figure 3, the length of the tapped delay line is 2 (i.e. it comprises 2 reference signals) and so there is one additional controller NN 302A, resulting in a total number of 2 controller NNs in the architecture. This is purely illustrative and the skilled person will understand that the numbers can vary. For example, if the tapped delay line included 1000 reference signals then there would be a corresponding total of 1000 controller NNs (one "original" controller NN 302 and 999 "copied" controller NNs 302A). The weights and biases of the/each 'copied NN 302A are exactly the same as those of the first controller NN 302. All the controller NNs 302, 302A are also updated/trained in the same way simultaneously using the same training data comprising the input data x[n] and the corresponding error e[n] that is generated using it.

Using the same notation as above, in general,

$$u[n - k] = \sum_i w_i^{c,o} \sigma^c \left( \left[ \mathbf{W}\mathbf{x}[n - k] \right]_i + b_i^{c,h} \right) + b^{c,o}$$

where all the weights and biases in the above equation are those of the *current* iteration of the controller during training. The values of $u[n - k]$ are generated from the current iteration of the controller and standard backpropagation techniques can then be used to update the weights and biases of the controller to minimise a given cost function of $e[n]$.

In specific embodiments a Rectified Linear Unit (ReLU) activation is used for the controller NNs 302, 302A. In general, any activation function can be used, although there are likely to be significant differences in performance for a given size of network. The adjustment of the weights and biases of the networks can be achieved via backpropagation of the error through the network. In specific embodiments this is achieved using the ADAM optimizer. Backpropagation techniques are generally fundamentally gradient descent algorithms to minimize the cost function. In general, the cost function will be determined by the application/system. For example, when aiming to achieve broadband attenuation of the acoustic disturbance at the error sensor the cost function is the mean square value of the error. As this example is an acoustics application, and humans essentially perceive sound intensity (rather than the true pressure of a sound), this is an appropriate cost function. In general, the cost function can be any function of $e[n]$ which can be evaluated and minimized.

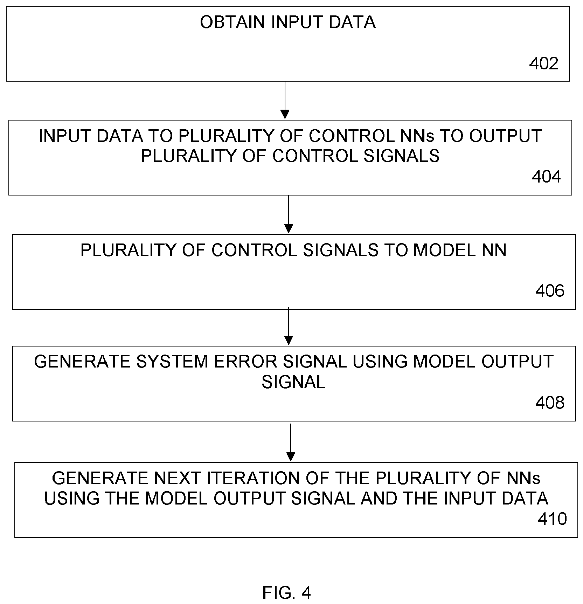

Figure 4 is a flowchart illustrating steps performed by an example method of training a NN that will be useable as a system controller using the training architecture shown in Figure 3. The steps can be performed by software instructions being executed on one or more processor. It will be appreciated that at least one of the steps may be re-ordered or omitted. One or more additional steps may be performed in some cases. Further, although the steps are shown as being performed in sequence in the Figure, in alternative embodiments some of them may be performed concurrently, possibly on different processors or cores. It will also be understood that embodiments can be implemented using any suitable software application, programming language, data editors, etc, and may be represented/stored/processed using any suitable data structures and formats.

Specific embodiments can use the Tensorflow and Keras libraries for Python™ for the training of the networks, as well as generating their outputs for a given input. In practice, the structure of these NNs comprises a series of nested operations of matrix multiplication, nonlinear activation functions and addition. Similarly, the training algorithms use nested functions to calculate the gradient of the cost function with respect to a given weight or bias of the network. As such, any suitable software can be used for these tasks.

At step 402, input data representing a tapped delay line comprising a plurality of reference signals x[n] of the system to be controlled is obtained. The data may be obtained from storage. Alternatively, the data may be obtained (possibly in real-time) during actual use or simulation of the system. In some cases the data may be obtained from a remote device, such as a sensor connected to the system.

At step 404, the plurality of reference signals x[n] are input to a respective plurality of NNs 302, 302A. As discussed above, the plurality of NNs comprise a first NN 302 and one or more copies 302A of the first NN. Each of the copies 302A are configured such that all their weights and biases are exactly the same as weights and biases of the current iteration of the first NN 302 during training. Thus, all the NNs are substantially identical. The plurality of NNs 302, 302A output a respective plurality of control signals that can represent a tapped delay line u[n].

At step 406, the tapped delay line u[n] comprising the plurality of control signals is received by a model configured to simulate the system. The model can comprise a further NN 306 trained as a plant model for the system and which outputs a model signal y[n].

At step 408, a system error signal e[n] is generated using the model signal y[n]. In embodiments this can be done by linearly summing a disturbance signal d[n] of the system and the model signal y[n].

At step 410 the next iteration of the plurality of NNs is generated by training the plurality of NNs using training data comprising the data that was input at step 402 and the error signal generated at step 408. Thus, all the NNs are substantially identical with the weights and the biases of all the NNs in the plurality of NNs matching exactly (i.e. the weights and the biases of the next iteration of the at least one further NN 302A correspond to the weights and the biases of the next iteration of the first NN 302 as updated).

Control may then return to step 402 to continue the training, or the method may end when the training is complete, e.g. when no more input data is provided or in response to user instruction.

Data representing one of the trained NNs 302, 302A, including all its weights and biases, can be extracted from the full dual-net architecture and stored or transferred to another device for further use/processing, e.g. by a real-time system control application. As the generation of the output of the NN comprises a series of nested operations this can be undertaken on a variety of different types of processors. It will also be understood that the NN data can be in any suitable format that is compatible with any software application or processor that will use it. The NN data can be used to execute the trained NN in prediction mode so that it functions as a controller for the system (or the same type of system) from which the training data originated.

The new NN training approach disclosed herein is more computationally intensive than the known method that simply stores $u[n]$ in memory and retrieves it. However, the new approach can reduce or eliminate the stability and performance issues that arise when using the known memory-based approach. Further, computing u[n] is only required during the training of the controller NN, as is the availability of the previous control signal values. When the trained controller NN is used as the actual system controller during operation/prediction phase it is fixed and so, for the same sized controller, the computational cost to produce $u[n]$ from $\mathbf{x}[n]$ is independent of the training method. It will be understood that only one controller NN is required in use, and none of the copies that are utilized during the training phase. For example, a controller NN 302 that has been trained using the architecture illustrated in Figure 3 can be used in the place of the controller NN 202 in the control system shown in Figure 2.

It will be understood that embodiments can be designed to train a NN useable as a controller for any suitable system. Specific applications will be disclosed below, but it will be understood that these are exemplary only.

In a first example embodiment the system comprises an acoustic noise control system where a primary loudspeaker generates a disturbance and a secondary loudspeaker creates a cancelling signal. In this embodiment the input reference signal x[n] comprises the frequency of the signal input to the primary speaker and the disturbance d[n] comprises the frequency of the signal output by the primary speaker. The control signal u[n] output by the controller NNs represents a frequency of a signal that would be input to the secondary loudspeaker to generate the cancelling signal. The plant model NN outputs a signal y[n] that simulates the disturbance generated by the primary loudspeaker based on its input u[n]. The error signal represents the difference between the disturbance d[n] and the signal y[n] output by the plant model NN. The training data for the plant model NN can typically be generated by inputting a random control signal $u[n]$ to the control actuator/loudspeaker. The resultant signal $y[n]$ at the error microphone/accelerometer is also measured and recorded. The plant model NN can then be trained to map a tapped delay line $\mathbf{u}[n]$ of the random control signal to the signal $y[n]$ measured at the error microphone. A limitation of this specific acoustic implementation is the assumption that the primary path and the plant are not coupled.

Another acoustic/vibroacoustic embodiment comprises control of road noise in a vehicle cabin. It is well known that the vibroacoustic pathway from the interaction of vehicle tyres with the ground to the acoustic noise in vehicle cabins can be strongly nonlinear as a result of the nonlinear behaviours of modern suspension systems. Embodiments can therefore be applied to improve acoustic control in a cabin for cancelling tyre noise. The controller input can comprise an accelerometer close to the wheel. The primary path is the vibroacoustic pathway from the accelerometer to the (likely approximate) location of the passenger ears. The disturbance is the noise caused at the passenger ears caused by the interaction between the wheel(s) and ground surface. The control signal comprises a voltage applied to a loudspeaker within the vehicle cabin aiming to produce acoustic cancellation at the passenger ears. The plant model models the mapping between the voltage applied to the loudspeaker and the pressure measured at (or close to) the passenger ear(s).

Another acoustic/vibroacoustic embodiment comprises control of vibration in a large structure, such as a cargo ship. Large engines can cause strong vibrations that propagate throughout the structure, causing unwanted vibration (perhaps at the location of some delicate cargo). Due to the large amplitude of the structural displacement caused by the engine(s), the structure exhibits nonlinear behaviour local to the engines. As a result of structural damping, the structure behaves approximately linearly further from the engines. In this case, control actuators further from the engines will potentially be decoupled from the nonlinear behaviour of the structure local to the engines, and so embodiments can be used to control the vibration. In this case, the input comprises an accelerometer measurement on an engine. The primary path is the vibration pathway(s) from the engine to the location where vibration control is desired. The disturbance is the vibration (displacement of the structure) that is to be controlled at the control location. The control signal can comprise a voltage applied to the control actuator. The plant model models the mapping from the voltage signal applied to the control actuator and the resultant displacement of the structure at the control location.

In embodiments the fixed NN controllers have been found to have the ability to generalise well across a range of magnitudes of inputs to the nonlinear system. Relative to the performance of the FxLMS algorithm, the control performance of the NN controllers is generally best close to the upper limit of the range of magnitudes of inputs over which the controllers are trained. This may be a result of the chosen cost function during the training of the NNs. Increasing the training range generally improves performance at higher input magnitudes, but may compromise performance at lower input magnitudes. Increasing the number of hidden nodes in the NN controllers can improve performance within the trained range and generalised performance can be improved above the trained range. The residual error of a NN controller under sudden changes to the system input indicates that the controller shows robust behaviour over this transition.

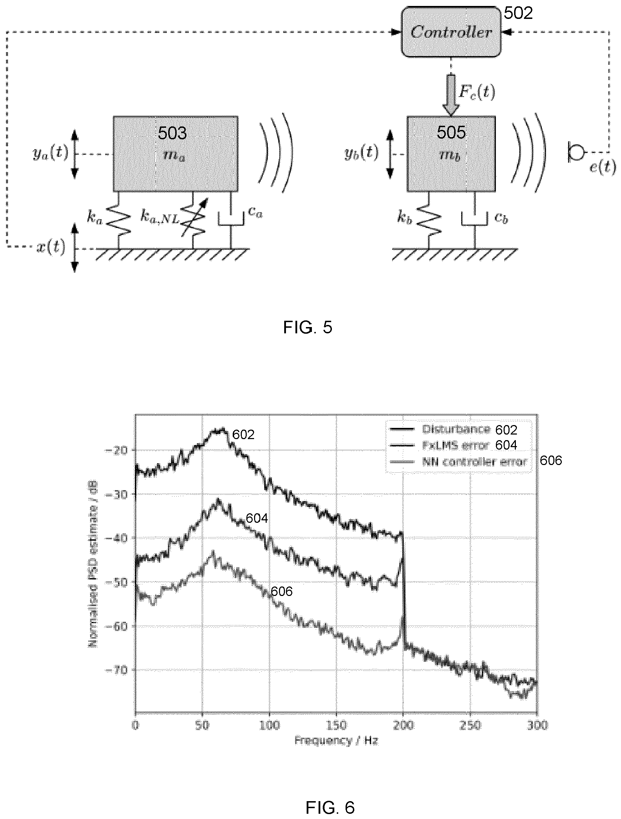

To demonstrate the advantages that can be offered by embodiments, experimental results for an arrangement where a controller was used in combination with a pair of simulated loudspeakers will be discussed. Figure 5 is a schematic diagram of the arrangement. A primary loudspeaker 503, which generates acoustic disturbance, was modelled as a damped Duffing oscillator. A secondary loudspeaker 505, which generates the cancelling acoustic signal, was modelled as a simple harmonic oscillator. Both sources are assumed to behave as monopoles. The displacement of the Duffing oscillator, $y_a(t)$, was caused by the motion of the floor to which it is attached. The displacement $x(t)$ of this floor is also taken to be the reference signal passed to the feedforward controller. The displacement $y_b(t)$ of the mass mb was caused by the control force $F(t)$ produced by the controller 502.

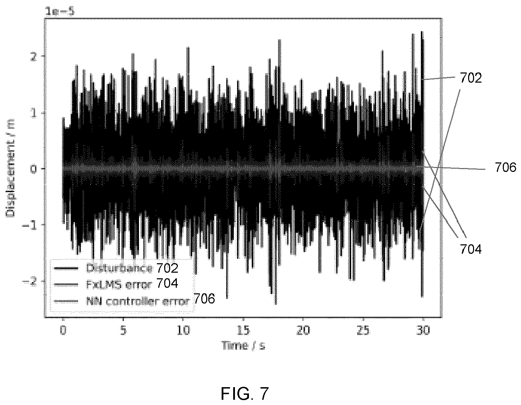

Figure 6 is a graph presenting an example of the control performance of the controller 502 in the frequency domain when it was implemented using a controller NN trained according to an embodiment (e.g. the first NN 302) and compared to a conventional controller using the FxLMS algorithm. The equivalent time domain results are presented in Figure 7.

In the experiment the NN controller had 30 hidden layer nodes and was trained over the range $[0, 6 \times 10^{-6}]$ m. The controllers were tested at an input magnitude of $5 \times 10^{-6}$ m. The linear FxLMS controller achieved a total attenuation of 16.4 dB, whereas the NN controller achieved a total attenuation of 28.0 dB. Both controllers achieve broadband control up to 200 Hz with similar shaped error spectra, with the NN controller achieving 10-15 dB greater performance across this entire range. The frequency content present in the disturbance above 200 Hz was a result of the nonlinearity of the system and remained uncontrolled by either implementation of the controller due its low level.

In alternative embodiments reconsidering the form of the cost function used to train the NN controllers can help to improve performance at lower input magnitudes. This may also be achieved by including fixed, pretrained linear elements within the NN during training to provide some degree of 'transfer learning' from the linear case. Alternative embodiments may also be based on other NN architectures, which may provide relative benefits for the control of different types of nonlinearities. MLPs are capable of nonlinear mappings, and therefore are an appropriate architecture to model and control nonlinear systems. However, MLPs may not be able to fully capture the dynamics of systems which include hysteretic or other time-dependent nonlinearities. Networks which incorporate recurrence (e.g. RNNs, LSTMs, etc) may offer advantages for these. An analogy can be drawn between FIR and IIR filters, and MLPs and RNNs. IIR filters are known to offer, in some cases, increased computational efficiency over FIR filters due to their internal feedback. A similar advantage may arise for recurrent networks over MLPs for nonlinear modelling and control. Convolutional networks have also shown good performance, which may be a result of their inherently efficient architecture when applied to image and signal processing. Thus, such NNs can also be suitable for alternative embodiments.

Embodiments can provide advantages including being relatively easy to set up in standard Machine Learning libraries, and the tapped delay line for the plant model is always generated from the most 'up to date' version/iteration of the controller NN and so can improve training stability and performance.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer-implemented method of training an artificial neural network, NN, useable as a controller for a system, the method comprising:

   obtaining (402) input data representing a tapped delay line comprising a plurality of reference signals of the system;
   inputting (404) the plurality of reference signals to a respective plurality of NNs that output a respective plurality of control signals, the plurality of NNs comprising a first NN and at least one further NN, wherein weights and biases of the at least one further NN correspond to weights and biases of a current iteration of the first NN;
providing (406) data representing a tapped delay line comprising the plurality of control signals as input to a model configured to simulate the system and to output a model signal;
generating (408) a system error signal using the model signal, and
training (410) a next iteration of the plurality of NNs using training data comprising the obtained input data and the system error signal.

2. A method according to claim 1, wherein a number of the plurality of NNs corresponds to a number of the plurality of reference signals in the obtained input data.

3. A method according to claim 1 or 2, wherein the current iteration of the NN was generated using training data comprising previously-obtained input data comprising a plurality of reference signals obtained immediately prior to the obtained input data, and corresponding system error signal generated using the previously-obtained input data.

4. A method according to any preceding claim, further comprising storing data representing a trained NN including the weights and biases of the first NN.

5. A method according to any preceding claim, wherein the system error signal is generated (408) by linearly summing a disturbance signal of the system and the model signal.

6. A method according to any preceding claim, wherein the training (410) comprises applying a backpropagation technique to update the weights and biases of the plurality of NNs to minimise a cost function of the error signal.

7. A method according to any preceding claim, wherein the model comprises a further NN trained to function as a plant model of the system.

8. A method according to any preceding claim, wherein each of the plurality of NNs comprises a Multilayer Perceptron, MLP, with a single hidden layer.

9. A method according to any preceding claim, wherein inputs and outputs of the plurality of NNs are non-linear and/or inputs and outputs of the model are non-linear.

10. A computer readable medium, or circuit, storing a computer program to operate a method according to any preceding claim.

11. Apparatus (300) for training an artificial neural network useable as a system controller, the system comprising a processor and memory, the memory comprising computer executable instructions for performing a method according to any of claims 1 to 9.

12. A system controller (202) comprising an artificial neural network (302) trained using a method according to any of claims 1 to 9.

13. A system controller according to claim 12, wherein the system controller (202) comprises a feedforward system controller.

14. A system controller according to claim 12 or 13, wherein the system controller (202) is configured to control acoustic noise/vibration in the system.

15. A system including a controller (202) according to any of claims 12 to 14.

FIG. 1

FIG. 2

FIG. 3

| OBTAIN INPUT DATA |
|---|
| 402 |

↓

| INPUT DATA TO PLURALITY OF CONTROL NNs TO OUTPUT PLURALITY OF CONTROL SIGNALS |
|---|
| 404 |

↓

| PLURALITY OF CONTROL SIGNALS TO MODEL NN |
|---|
| 406 |

↓

| GENERATE SYSTEM ERROR SIGNAL USING MODEL OUTPUT SIGNAL |
|---|
| 408 |

↓

| GENERATE NEXT ITERATION OF THE PLURALITY OF NNs USING THE MODEL OUTPUT SIGNAL AND THE INPUT DATA |
|---|
| 410 |

FIG. 4

FIG. 5

FIG. 6

FIG. 7

| | Europäisches Patentamt European Patent Office Office européen des brevets | **EUROPEAN SEARCH REPORT** | Application Number EP 23 27 5037 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/080744 A1 (SOHN YOUNGSEOK [KR] ET AL) 12 March 2020 (2020-03-12) * the whole document * | 1-15 | INV. G05B13/02 G06N3/045 |
| X | US 5 367 612 A (BOZICH DANIEL J [US] ET AL) 22 November 1994 (1994-11-22) * the whole document * | 1,10-12, 15 | |
| X | US 2022/245429 A1 (ZIMMERMANN HEIKO [DE] ET AL) 4 August 2022 (2022-08-04) * the whole document * | 1,10-12, 15 | |
| A | EP 3 958 423 A1 (HITACHI ENERGY SWITZERLAND AG [CH]) 23 February 2022 (2022-02-23) * the whole document * | 1-15 | |
| | | | TECHNICAL FIELDS SEARCHED (IPC) G06N G05B |

The present search report has been drawn up for all claims

| Place of search | Date of completion of the search | Examiner |
|---|---|---|
| The Hague | 3 August 2023 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 27 5037

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | Publication date | Patent family member(s) | | Publication date |
|---|---|---|---|---|---|
| US 2020080744 | A1 | 12-03-2020 | KR | 20200034023 A | 31-03-2020 |
| | | | US | 2020080744 A1 | 12-03-2020 |
| US 5367612 | A | 22-11-1994 | US | 5367612 A | 22-11-1994 |
| | | | US | 5426720 A | 20-06-1995 |
| US 2022245429 | A1 | 04-08-2022 | CN | 114026570 A | 08-02-2022 |
| | | | CN | 114556365 A | 27-05-2022 |
| | | | EP | 3973456 A1 | 30-03-2022 |
| | | | EP | 3973457 A1 | 30-03-2022 |
| | | | US | 2022245429 A1 | 04-08-2022 |
| | | | US | 2022292331 A1 | 15-09-2022 |
| | | | WO | 2020233850 A1 | 26-11-2020 |
| | | | WO | 2020233851 A1 | 26-11-2020 |
| EP 3958423 | A1 | 23-02-2022 | CN | 114077810 A | 22-02-2022 |
| | | | EP | 3958423 A1 | 23-02-2022 |
| | | | JP | 7309793 B2 | 18-07-2023 |
| | | | JP | 2022036032 A | 04-03-2022 |
| | | | US | 2022057759 A1 | 24-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z.-C. QIU ; W.-Z. ZHANG.** *Trajectory planning and diagonal recurrent neural network vibration control of a flexible manipulator using structural light sensor,* vol. 132, 563-594